(19) Europäisches Patentamt
European Patent Office
Office européen des brevets

(11) **EP 4 280 066 B1**

(12) **EUROPEAN PATENT SPECIFICATION**

(45) Date of publication and mention
of the grant of the patent:
**02.07.2025 Bulletin 2025/27**

(21) Application number: **22796231.3**

(22) Date of filing: **02.05.2022**

(51) International Patent Classification (IPC):
*G01K 7/42* $^{(2006.01)}$    *G06F 1/20* $^{(2006.01)}$
*G06F 1/16* $^{(2006.01)}$    *G06F 11/30* $^{(2006.01)}$
*G01K 3/14* $^{(2006.01)}$

(52) Cooperative Patent Classification (CPC):
**G01K 7/42; G01K 7/425; G06F 1/1626;
G06F 1/203; G06F 1/206; G06F 11/30;**
G01K 2003/145; G01K 2217/00

(86) International application number:
**PCT/KR2022/006242**

(87) International publication number:
**WO 2022/231399 (03.11.2022 Gazette 2022/44)**

(54) **METHOD AND APPARATUS FOR IMPLEMENTING VIRTUAL SENSOR IN ELECTRONIC DEVICE**

VERFAHREN UND VORRICHTUNG ZUR IMPLEMENTIERUNG EINES VIRTUELLEN SENSORS IN EINER ELEKTRONISCHEN VORRICHTUNG

PROCÉDÉ ET APPAREIL DE MISE EN OEUVRE DE CAPTEUR VIRTUEL DANS UN DISPOSITIF ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.04.2021 KR 20210056559**

(43) Date of publication of application:
**22.11.2023 Bulletin 2023/47**

(73) Proprietor: **Samsung Electronics Co., Ltd.
Suwon-si, Gyeonggi-do 16677 (KR)**

(72) Inventor: **KIM, Youngsan
Suwon-si, Gyeonggi-do 16677 (KR)**

(74) Representative: **HGF
HGF Limited
1 City Walk
Leeds LS11 9DX (GB)**

(56) References cited:
JP-A- 2001 291 723    JP-A- 2010 276 074
JP-A- 2016 187 015    JP-A- 2020 088 884
KR-A- 20180 115 571    US-A1- 2008 028 778
US-A1- 2008 043 807    US-A1- 2018 181 171
US-B2- 8 768 530

Description

[Technical Field]

The disclosure relates to a method and an apparatus for implementing a virtual sensor (for example, a virtual thermistor) for checking temperature (or heating) of an electronic device by the electronic device.

[Background Art]

With the development of digital technologies, electronic device in various types such as personal digital assistants (PDAs), smart phones, tablet personal computers (PCs), artificial intelligent (AI) speakers, wearable devices, digital cameras, and/or Internet of things (IoT) devices are widely used. In order to support and increase functions of the electronic devices, hardware parts and/or software parts of the electronic devices are continuously developed.

For example, an electronic device may include a sensor for detecting (or measuring) various pieces of information (or data), and may provide various pieces of relevant information (or functions) on the basis of the sensing data acquired from the sensor. For example, the electronic device may measure a biometric signal through the sensor and provide various pieces of information (for example, health information) related to a user's health on the basis of the measured biometric signal. Recently, the electronic device may monitor heating of the electronic device through a sensor (for example, a thermistor or a temperature sensor) capable of measuring temperature inside the electronic device and provide information (for example, heating information) related to the use of the electronic device on the basis of the monitoring result.

According to an embodiment, the sensor (for example, the thermistor) may be mounted in the electronic device through a semiconductor or a mechanical object (for example, a circuit substrate) for designing the semiconductor and measure temperature of a corresponding electronic component. According to an embodiment, in the electronic device, the thermistor may be a semiconductor designed as a chip to measure (or detect) temperature on the basis of the principle of resistance varying depending on temperature. According to an embodiment, the electronic device may apply a voltage to the thermistor and convert a value according to voltage distribution into an electrical signal, and a processor may determine temperature on the basis of the electrical signal. To this end, the thermistor should be electrically connected to the processor and needs an additional circuit element for voltage application. So-called virtual temperature sensors are also known in the prior art, e.g. from US 2008/028778 A1, US 2008/043807 A1, US 2018/181171 A1, and US 8 768 530 B2, for thermal management of electronic devices.

[Disclosure of Invention]

[Technical Problem]

Accordingly, an electronic component of an electronic device which cannot be electrically connected to a thermistor or the thermistor cannot be used in an internal area of the electronic device, and thus temperature of a corresponding area cannot be measured. For example, the electronic device includes various electronic components generating heat (or heating sources or heating source components) (for example, a camera module, a speaker, a communication module, a light drive IC (LDI), and/or a flash), but it is difficult to electrically connect the various electronic components to the thermistor and it may be difficult to measure accurate temperature of electronic components or areas corresponding thereto. Since the thermistor cannot be electrically mounted in even an area including no heating source unless there is a design of an additional circuit, it may be difficult to accurately measure temperature of the area including no heating source.

Various embodiments disclose a method and an apparatus for implementing a virtual sensor (for example, a virtual thermistor) capable of collecting information provided by the electronic device and measuring temperature without mounting of a hardware (or physical) sensor (for example, a thermistor) in the electronic device.

Various embodiments disclose a method and an apparatus for efficiently distributing resources by effectively managing temperature of the electronic device through a virtual sensor without design of a separate device (for example, a thermistor or a temperature sensor) for measuring temperature in the electronic device.

Various embodiments disclose a method and an apparatus for configuring a virtual thermistor in a heating source in which mounting of the thermistor is difficult and/or a predetermined area and predicting local heating of the electronic device through the virtual thermistor.

Various embodiments disclose a method and an apparatus for classifying an area to be predicted by the electronic device according to characteristics (for example, whether a heating source is included, whether the current can be measured, and whether collectable data is continuous) and implementing a virtual thermistor for each of the areas classified according to the characteristics.

**[Solution to Problem]**

The above mentioned technical problem is solved by an electronic device according to claim 1 and a method of operating an electronic device according to claim 12.

**[Advantageous Effects of Invention]**

According to an electronic device and a method of operating the same according to an embodiment of the disclosure, it is possible to collect information provided by the electronic device without mounting of a hardware thermistor to the electronic device, configure a virtual thermistor on the basis of the collected information, and predict heating (for example, local heating and/or overall heating) of the electronic device through the virtual thermistor. According to an embodiment, temperature even for an area in which a hardware thermistor cannot be mounted to the electronic device can be collected through the virtual thermistor.

According to an embodiment of the disclosure, temperature for main local heating sources (for example, a speaker, a camera, a communication module, and/or an LDI) to which the hardware thermistor cannot be mounted can be collected. According to an embodiment, it is possible to provide an index for detecting real-time temperature distribution to the electronic device by collecting temperature of areas of which temperature cannot be predicted. According to an embodiment, an overall temperature state of the electronic device can be detected in real time through a configuration of the virtual thermistor. For example, resources of the electronic device can be efficiently distributed in accordance with the current and/or heating by predicting surface heating through the virtual thermistor or effectively managing overall heating of the electronic device.

Further, various effects directly or indirectly detected through the disclosure can be provided.

**[Brief Description of Drawings]**

In connection with the description of drawings, the same or similar reference numerals can be used for the same or similar elements.

FIG. 1 is a block diagram illustrating an example electronic device in a network environment according to various embodiments.

FIG. 2 schematically illustrates an example of a block diagram of an electronic device according to an embodiment of the disclosure.

FIG. 3 illustrates area classification for configuring a virtual thermistor in an electronic device according to an embodiment of the disclosure.

FIG. 4 illustrates an example of classifying a predicted area of the electronic device according to a predetermined characteristic according to an embodiment of the disclosure.

FIG. 5 illustrates an example of classifying a predicted area of the electronic device according to a predetermined characteristic according to an embodiment of the disclosure.

FIG. 6 illustrates an example of classifying a prediction area in the electronic device according to a predetermined characteristic according to an embodiment of the disclosure.

FIG. 7 is a flowchart illustrating a method of operating an electronic device according to an embodiment of the disclosure.

FIG. 8 is a flowchart illustrating a method of operating an electronic device according to an embodiment of the disclosure.

FIG. 9 is a flowchart illustrating a method of operating an electronic device according to an embodiment of the disclosure.

**[Mode for the Invention]**

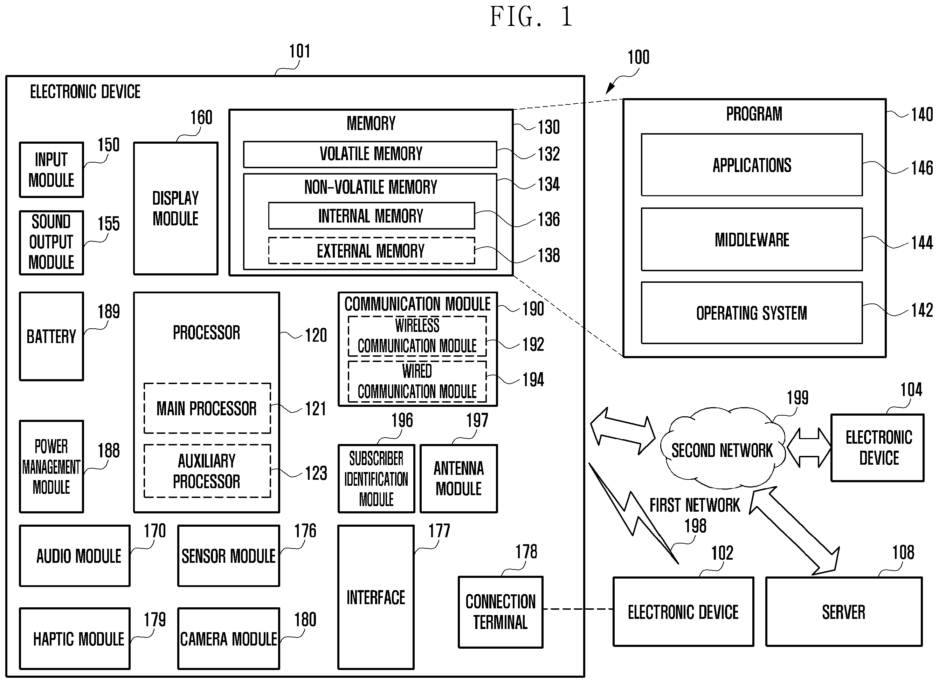

FIG 1 is a block diagram illustrating an example electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

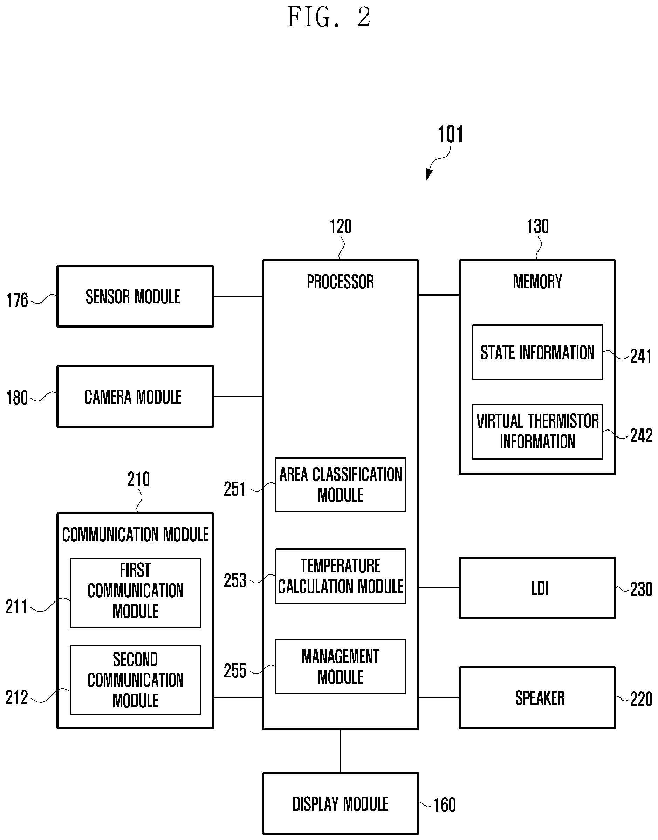

FIG. 2 schematically illustrates an example of a block diagram of an electronic device according to an embodiment of the disclosure.

In the disclosure, the electronic device 101 according to an embodiment may include a smart phone, a tablet PC, and/or a laptop computer. According to an embodiment, the electronic device 101 may be a device in various forms such as a bar type, a foldable type, a slidable type, or a rollable type depending on the device form.

Referring to FIG. 2, the electronic device 101 according to an embodiment may include the sensor module 176, the camera module 180, a communication module 210, the display module 160, a speaker 220, a LED drive IC (LDI) 230, the memory 130, and/or the processor 120.

According to an embodiment, the sensor module 176 may include an element corresponding to the sensor module 176 as described with reference to FIG. 1. According to an embodiment, although not illustrated, the sensor module 176 may include various sensors such as an acceleration sensor, an atmospheric pressure sensor, a gyro sensor, a temperature sensor, a humidity sensor, an ultrasonic sensor, an illumination sensor, and/or a biometric sensor (or a bio sensor). According to an embodiment, the electronic device 101 may detect temperature (or heating) of the electronic device 101 on the basis of sensing data using the temperature sensor of the sensor module 176.

According to an embodiment of the disclosure, the sensor module 176 may include a physical sensor (for example, the sensor module 176 of FIG. 1) and a software sensor (for example, a virtual sensor). According to an embodiment, the physical sensor may be configured as a device causing a change in an electrical value by a change in data (for example, temperature, humidity, pressure, sound, and/or biometric signal) measured by the electronic device 101.

According to an embodiment, the software sensor (for example, the virtual sensor) may indicate a virtual sensor making a new value by combining values made by the physical sensor. For example, in the disclosure, a software virtual sensor such as a virtual thermistor may be configured using a value of the physical sensor such as a temperature measurement sensor (for example, a thermistor and/or a temperature sensor). According to an embodiment, the virtual sensor (for example, the virtual thermistor) may be configured as middleware and virtualized, and prediction (or estimation) of local temperature and/or overall average temperature of the electronic device 101 and provision thereof to the user may be supported using the virtualized sensor (for example, the virtual thermistor).

According to an embodiment, the camera module 180 may capture a still image and a moving image. According to an embodiment, the camera module 180 may include one or more lenses, image sensors, image signal processors, or flashes. In an embodiment, the flash may emit light used for enhancing light emitted or reflected from a subject. According to an embodiment, the flash may include one or more light emitting diodes (for example, red-green-blue (RGB)) LED, white LED, infrared LED, or ultraviolet LED), or a xenon lamp.

According to an embodiment, the communication module 210 may include an element corresponding to the wireless communication module 192 as described with reference to FIG. 1. According to an embodiment, the communication module 210 may support communication with an external device through a first network (for example, a short-range communication network such as Bluetooth, BLE, WiFi direct, IrDA, and/or ultra-wide band (UWB)) or a second network (for example, a legacy network (for example, a 3G network and/or a 4G network) or a long-range communication network such as a 5G network, a next-generation communication (for example, new radio (NR)) network, Internet, or a computer network (for example, LAN or WAN). According to an embodiment, the electronic device 101 may communicate with an external device (for example, the server 108 and/or another electronic device 102 or 104 of FIG. 1) through the network using the communication module 210. According to an embodiment, the communication module 210 may transmit data generated by the electronic device 101 to an external device or receive data transmitted from an external device.

According to an embodiment, the communication module 210 may include a first communication module 211 for first communication and a second communication module 212 for second communication. In an embodiment, the first communication module 211 may support establishment of a first wireless communication channel and performance of first communication through the established wireless communication channel. For example, the first communication module 211 may perform first predetermined communication (for example, communication through the first network) with an external device. In an embodiment, the second communication module 212 may support establishment of a second wireless communication channel and performance of second communication through the established wireless communication channel. For example, the second communication module 212 may perform second predetermined communication (for example, communication through the second network) with an external device. Various embodiments are not limited thereto, and it may be understood that the first communication module 211 and the second communication module 212 indicate different types of communication modules for performing different types of communication.

According to an embodiment, the display module 160 may include an element corresponding to the display module 160 as described with reference to FIG. 1. According to an embodiment, the display module 160 may visually provide various pieces of information to the outside (for example, the user) of the electronic device 101. According to an embodiment, the display module 160 may include a touch sensing circuit (or a touch sensor) (not shown), a pressure sensor for measuring an intensity of a touch, and/or a touch panel for detecting a stylus pen in a magnetic field type (for example, a digitizer).

According to an embodiment, the display module 160 may detect a touch input and/or a hovering input (or a proximity input) b measuring a change in a signal (for example, voltage, quantity of light, resistance, electromagnetic signal, and/or quantity of electric charge) for a specific location of the display module 160 on the basis of the touch sensing circuit, the pressure sensor, and/or the touch panel. According to an embodiment, the display module 160 may include a liquid crystal display (LCD), an organic light emitted diode (OLED), and an active matrix organic light emitted diode (AMOLED). According to some embodiments, the display module 160 may include a flexible display.

According to an embodiment, the display module 160 may visually provide temperature (or heating) information related to at least one predetermined area, overall average temperature information of the electronic device 101, real-time temperature distribution information, and/or surface heating information under the control of the processor 120.

According to an embodiment, the speaker 220 may output an electrical signal in the form of a sound (for example, a voice).

According to an embodiment, the LDI 230 is a circuit for driving the display module 160 and may provide a drive signal and data.

According to an embodiment, the memory 130 may include an element corresponding to the memory 130 as described with reference to FIG. 1. According to an embodiment, the memory 130 may store various pieces of data used by the electronic device 101. The data may include, for example, an application (for example, the program 140 of FIG. 1) and input data or output data for commands related thereto.

According to an embodiment, the memory 130 may include an application which can be executed by the processor 120, the application being related to the operation of the virtual sensor (for example, the virtual thermistor). For example, the application may include an application for classifying a prediction area to be predicted by the electronic device 101 on the basis of a predetermined characteristic, configuring a virtual thermistor for each prediction area classified according to the characteristic, and predicting local heating on the basis of the virtual thermistor. According to an embodiment, the application may be stored in the memory 130 as software (for example, the program 140 of FIG. 1) and may be executed by the processor 120.

According to an embodiment, the memory 130 may store data related to performance of functions of the electronic device 101. According to an embodiment, the data may include state information 241 and virtual thermistor information 242. According to an embodiment, the state information 241 may include information related to locations (or areas) at which various electronic devices mounted on the electronic device 101 are disposed (or mounted), information related to usage temperature (or operation temperature) for each element, and information related to usage current (or operation current) for each element. According to some embodiments, the memory 130 may include at least one piece of first temperature information divided for each prediction area and second temperature information related to the entire area.

In an embodiment, the temperature information may include various pieces of predicted temperature data (for example, calculated temperature values) which can be measured in predetermined area of the electronic device 101. According to an embodiment, the virtual thermistor information 242 may include information related to a virtual sensor (for example, a virtual thermistor) configured in accordance with each prediction area in the electronic device 101 classified on the basis of the predetermined characteristic. In an embodiment, the virtual thermistor information 242 may include temperature data predicted on the basis of a predetermined characteristic.

According to an embodiment, the memory 130 may store at least one module for operating the virtual sensor (for example, the virtual thermistor) which can be executed by the processor 120. For example, the memory 130 may include at least some of an area classification module 251, a temperature calculation module 253, and/or a management module 255 in the form of software (or instructions).

According to an embodiment, the processor 120 may configure the virtual sensor (for example, the virtual thermistor) and control functions (or operations) to provide temperature information related to the electronic device 101 using the same. According to an embodiment, the processor 120 may classify a prediction area to be predicted by the electronic device 101 on the basis of a predetermined characteristic, configure a virtual thermistor for each prediction area classified according to the characteristic, and predict temperature (or heating) (for example, local heating and/or overall heating) related to at least some areas of the electronic device 101 on the basis of the virtual thermistor.

According to an embodiment, the processor 120 may classify the prediction area on the basis of the predetermined characteristic, configure the virtual thermistor corresponding to the prediction area on the basis of the characteristic of classification of the prediction area, collect information on at least one prediction area on the basis of the virtual thermistor, and provide management (or control) related to temperature of each prediction area or temperature of the entire area and/or information on the basis of the collected information.

According to an embodiment, the processor 120 may include at least one module for operating the virtual sensor (for example, the virtual thermistor) and processing functions using the same. For example, the processor 120 may include the area classification module 251, the temperature calculation module 253, and/or the management module 255.

According to an embodiment, the area classification module 251 may classify an area (for example, a prediction area) related to prediction of temperature of the electronic device 101 on the basis of a predetermined characteristic. According to an embodiment, the area classification module 251 may classify the prediction area on the basis of at least partially whether the corresponding area includes a heating source, whether current can be measured, and/or whether data which can be collected is continuous. The classification of the prediction area on the basis of the predetermined characteristic according to an embodiment is described with reference to drawings described below.

According to an embodiment, the temperature calculation module 253 may collect at least one piece of corresponding data on the basis of the classification result of the prediction area (or predetermined characteristic) and calculate temperature of the corresponding prediction area on the basis of the collected data. According to an embodiment, the temperature calculation module 253 may calculate saturation temperature on the basis of the collected data and convert the calculated saturation temperature into virtual temperature aspect data. According to an embodiment, the temperature calculation module 253 may configure the virtual thermistor for the corresponding prediction area on the basis of the virtual temperature aspect data. The configuration of the virtual thermistor according to an embodiment is described with reference to drawings described below.

According to an embodiment, the management module 255 may support prediction (or estimation) of local temperature and/or overall average temperature of the electronic device 101 and provision thereof to the user through the virtual thermistor. According to an embodiment, the management module 255 may check heating of the electronic device 101 through the virtual thermistor, output a notification corresponding thereto, or control the operation of a corresponding element. According to an embodiment, the management module 255 may locally collect and predict (or estimate) temperature of the corresponding prediction area through the virtual thermistor and provide temperature (or heating) information related to at least one prediction area, overall average temperature information of the electronic device 101, real-time temperature distribution information, and/or surface heating information.

According to an embodiment, at least some of the area classification module 251, the temperature calculation module 253, and/or the management module 255 may be included in the processor 120 as hardware modules (for example, circuits) or may be implemented as software including one or more instructions which can be executed by the processor 120. For example, operations performed by the processor 120 may be stored in the memory 130 and may be performed by instructions executed by the processor 120 when performed.

According to various embodiments, the processor 120 may control various operations related to the general function of the electronic device 101 as well as the above function. For example, when a predetermined application is executed, the processor 120 may control the operation and screen display thereof. In another example, the processor 120 may perform control to transmit and receive data through communication with an external device and display the transmitted and received data through the display module 160. In another example, the processor 120 may receive input signals corresponding to various touch event or proximity event inputs supported by a touch-based or proximity-based input interface and control the operation of functions according thereto.

According to various embodiments, the elements of the electronic device 101 are not limited to the elements illustrated in FIG. 2, and at least one element may be omitted or may be added. According to an embodiment, the electronic device 101 may include a voice recognition module (not shown). For example, the voice recognition module (not shown) may indicate an eASR module and/or an eNLU.

The various embodiments of the disclosure may be implemented in a recording medium, which can be read through a computer or a device similar thereto, by using software, hardware, or a combination thereof. In various embodiments, the recording medium may include a computer-readable recording medium recording a program to perform an operation of classifying a prediction area to be predicted on the basis of a characteristic designated to a corresponding area, an operation of configuring a virtual thermistor for each prediction area classified according to the characteristic, and an operation of predicting temperature (or heating) (for example, local heating and/or overall heating) related to at least some areas of the electronic device 101 on the basis of the virtual thermistor.

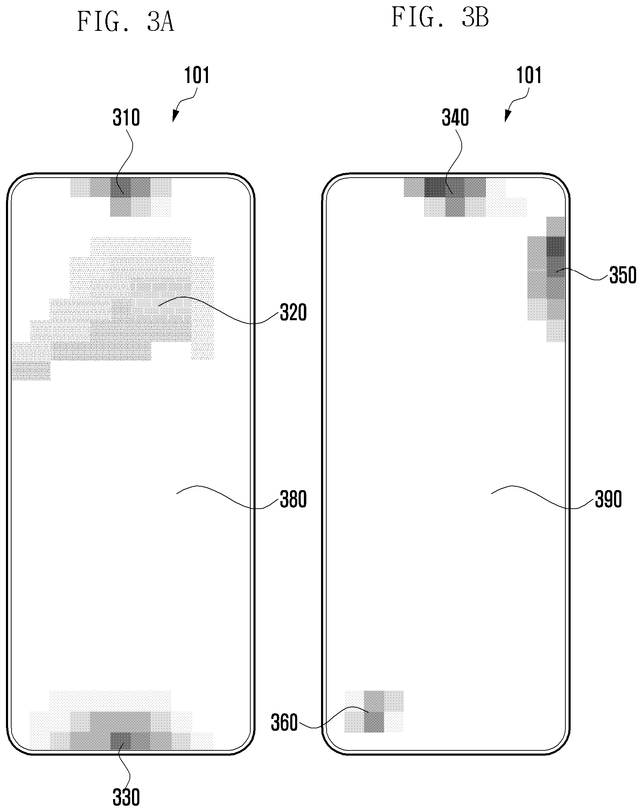

FIG. 3 illustrates area classification for configuring a virtual thermistor in an electronic device according to an embodiment of the disclosure.

According to an embodiment, FIG. 3 illustrates an example of an area including a heating source and an area including no heating source in the electronic device 101. According to an embodiment, in FIG. 3, an example <301> may indicate a state viewing a front side of the electronic device 101, and an example <303> may indicate a state viewing a rear side of the electronic device 101.

As illustrated in FIG. 3, according to an embodiment, the electronic device 101 may be divided into areas 310, 320, 330, 340, 350, and 360 (for example, areas including heating sources) in which the heating sources (for example, a front camera, an LDI, a rear camera, a communication module, a sensor module, and/or a speaker) are disposed and areas 380 and 390 (for example, areas including no heating source) in which no heating source is disposed.

Referring to the example <301>, according to an embodiment, the areas 310, 320, and 330 including the heating sources may indicate, for example, the area 310 in which the front camera is disposed, the area 320 in which another electronic elements (for example, the sensor module, various semiconductors, and/or various integrated circuits) are disposed, and the area 330 in which the LDI is disposed. According to an embodiment, the area 380 including no heating source may indicate the empty area 380 (for example, space) including no the heating source in the electronic device 101.

Referring to the example, <303>, according to an embodiment, the areas 340, 350, 360, and 370 including the heating sources may indicate, for example, the area 340 in which the rear camera is disposed, the area 350 in which the communication module 210 is disposed, and the area 370 in which the speaker 220 is disposed. According to an embodiment, the area 390 including no heating source may indicate the empty area 390 (for example, space) including no heating source in the electronic device 101.

According to an embodiment, in the case of an electronic element corresponding to a heating source, it is difficult to mount a thermistor and to make an electrical connection to the processor 120. Accordingly, it may be difficult to check local temperature (for example, heating) of the areas 310, 320, 330, 340, 350, and 360 including the heating sources through the thermistor disposed at a conventional specific location and configured to check heating of the corresponding semiconductor or the temperature sensor alone for checking temperature of the electronic device. The areas 380 and 390 which including no heating source are spaces in which the thermistor cannot be mounted through an electrical connection, and thus it is not possible to directly measure temperature of the areas 380 and 390 including no heating source.

According to various embodiments, it is possible to estimate (or predict) local heating in the electronic device 101 by configuring a virtual thermistor capable of measuring local temperature of a corresponding area among the areas 310, 320, 330, 340, 350, and 360 including the heating sources and the areas 380 and 390 including no heating source described above without any additional temperature measurement device (for example, the thermistor and/or the temperature sensor). In an embodiment, the virtual thermistor (for example, the virtual sensor) may indicate a virtual software sensor capable of predicting a new value (for example, temperature) on the basis of information collected from the electronic device 101 and/or an external device. In various embodiments, the virtual thermistor may replace the physical sensor (for example, the thermistor and/or the temperature sensor).

According to various embodiments, as illustrated in FIG. 3, it is possible to estimate local heating of the electronic device 101 by classifying the areas (for example, the areas 310, 320, 330, 340, 350, and 360 including the heating sources and the areas 380 and 390 including no heating source) in which the physical sensor (for example, the thermistor and/or the temperature sensor) cannot be mounted into respective prediction areas on the basis of a predetermined characteristic and configuring a corresponding virtual thermistor in each of the classified prediction areas.

According to various embodiments, the area (for example, prediction area) in which temperature is predicted may be classified according to the predetermined characteristic and the corresponding virtual thermistor may be configured in each of the areas classified according to the predetermined characteristic. According to an embodiment, the predetermined characteristic may include, for example, whether a heating source is included, whether current can be measured, and whether data which can be collected is continuous.

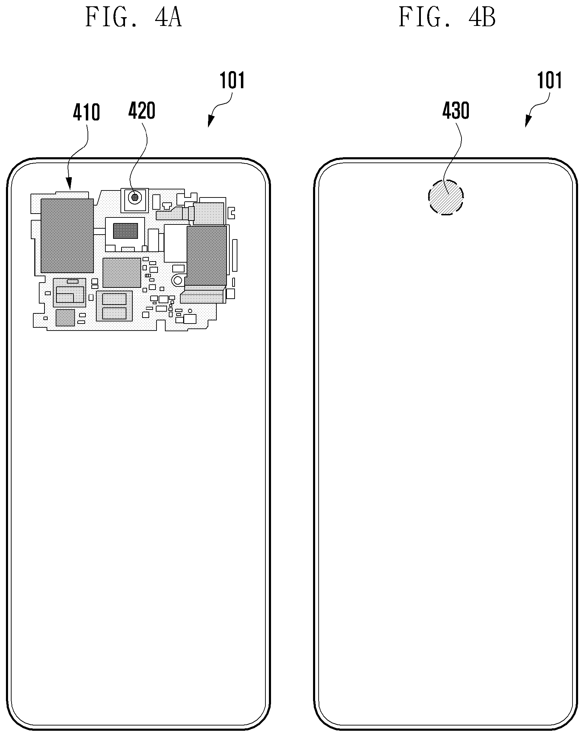

FIG. 4 illustrates an example of classifying a prediction area of the electronic device according to a predetermined characteristic according to an embodiment of the disclosure.

According to an embodiment, referring to FIG. 4, FIG. 4 illustrates an example of classifying a prediction area in which temperature is predicted (or estimated) in the electronic device 101 on the basis of whether heating is included.

As illustrated in an example <401> of FIG. 4, various electronic components 410 may be mounted (or disposed) within the electronic device 101, and one or more of the electronic components 410 may include heating sources (for example, a camera 420). According to an embodiment, when it is assumed that a predetermined area 430 is a prediction area in which temperature is predicted (or calculated) in the example <403> of FIG. 4, the electronic device 101 may configure a corresponding virtual thermistor on the basis of whether the prediction area 430 includes a heating source. For example, when the prediction area 430 includes the heating source (for example, the camera 420), a temperature characteristic of the virtual thermistor of the prediction area 430 may vary depending on whether the heating source is heated and an amount of heat.

Accordingly, the electronic device 101 may differently configure the virtual thermistor according to whether the heating source is included. For example, in the example of FIG. 4, the prediction area 430 may correspond to the location of the camera 420, and the electronic device 101 may determine that the prediction area 430 includes the heating source.

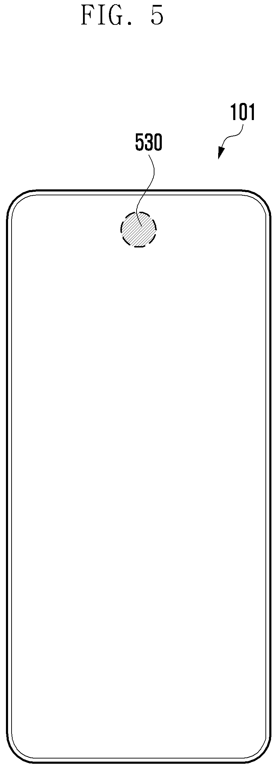

FIG. 5 illustrates an example of classifying a predicted area of the electronic device according to a predetermined characteristic according to an embodiment of the disclosure.

According to an embodiment, referring to FIG. 5, FIG. 5 illustrates an example of classifying a prediction area for predicting (or estimating) temperature in the electronic device 101 on the basis of whether current of the heating source can be measured.

In the example of FIG. 5, when it is assumed that a predetermined area 530 is a prediction area in which temperature is predicted and the prediction area 530 includes a heating source (for example, the camera 420 of FIG. 4), the electronic device 101 may configure a corresponding virtual thermistor on the basis of whether the current of the heating source included in the prediction area 530 can be measured. For example, when the prediction area 530 includes the heating source (for example, the camera 420 of FIG. 4) and the current of the heating source can be measured, a temperature characteristic of the virtual thermistor of the prediction area 530 may be configured by directly processing current data. Accordingly, the electronic device 101 may differently configure the virtual thermistor according to whether the current of the heating source can be measured.

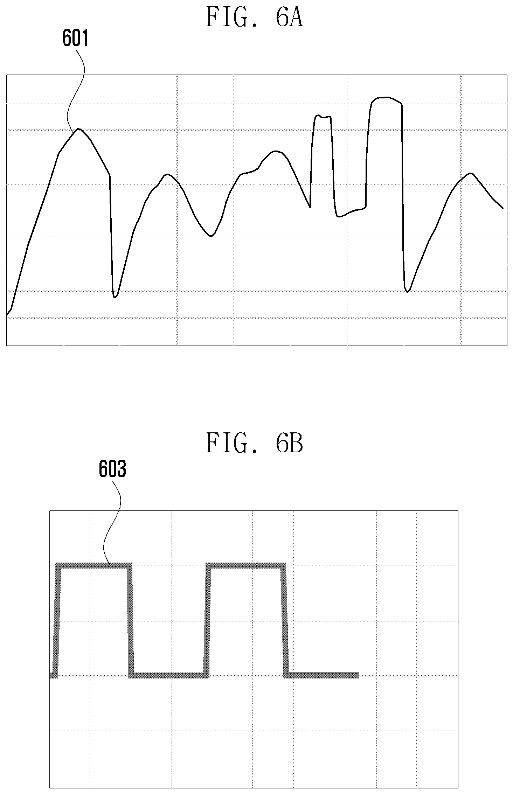

FIG. 6 illustrates an example of classifying a prediction area in the electronic device according to a predetermined characteristic according to an embodiment of the disclosure.

According to an embodiment, referring to FIG. 6, FIG. 6 illustrates an example of classifying a prediction area in which temperature is predicted (or estimated) in the electronic device 101 on the basis of whether data which can be collected from heating sources is continuous. According to an embodiment, as illustrated in FIG. 5, when it is assumed that the predetermined area 530 is the prediction area in which temperature is predicted, the prediction area 530 includes the heating source (for example, the camera 420 of FIG. 4), and the current of the heating source cannot be measured, the electronic device 101 may configure a corresponding virtual thermistor on the basis of whether data which can be collected from the heating source included in the prediction area 530 is continuous.

According to an embodiment, when the current of the heating source cannot be measured, the electronic device 101 may classify the collectable data related to temperature of the prediction area according to continuity as illustrated in FIG. 6. According to an embodiment, the collectable data may be divided into continuous data having continuous output as illustrated in the example <601> of FIG. 6 and discontinuous data having discontinuous output as illustrated in the example <603> of FIG. 6.

According to an embodiment, in the case of the continuous data, the electronic device 101 may directly process the continuous data and configure a virtual thermistor temperature characteristic. For example, the continuous data may include data (for example, coil temperature) continuously collected from a speaker of the electronic device 101 (for example, the speaker 220 of FIG. 2) and data (for example, CPU junction temperature) continuously collected from a communication module (for example, the communication module 210 of FIG. 2).

According to another embodiment, in the case of the discontinuous data, the electronic device 101 may assume that the discontinuous data has a linear relation with temperature of the prediction area and configure a temperature characteristic. For example, the discontinuous data may include data discontinuously collected according to on or off of a camera (for example, the camera module 180 of FIG. 2) of the electronic device 101. In another example, when the electronic device 101 is a slidable or rollable type, data collected according to a change in the state of the electronic device 101 such as an open state or a closed state may be included.

According to various embodiments, in a method of configuring a virtual thermistor in the electronic device 101, the area to be predicted may be classified according to a predetermined characteristic (for example, whether a heating source is included, whether the current can be measured, and/or whether data which can be collected is continuous) and the virtual thermistor corresponding to each of the classified areas according to the characteristic may be configured as illustrated in FIGs. 4, 5, and 6.

According to an embodiment, the electronic device 101 may configure a virtual thermistor for each corresponding area on the basis of (a) the case in which a heating source in included in an area to be predicted and the current of the heating source can be measured, (b) the case in which the heating source is included in the area to be predicted and the current of the heating source cannot be measured but continuous data related to temperature can be collected, (c) the case in which the heating source is included in the area to be predicted and the current of the heating source can be measured but discontinuous data related to temperature can be collected, and (d) the case in which the heating source is not included in the area to be predicted.

According to an embodiment, the existing electronic device may need an additional device and/or element to predict temperature like a separate physical device (for example, the thermistor and/or the temperature sensor) for measuring temperature and cannot predict temperature in an area in which the physical device cannot be mounted. However, according to various embodiments, it is possible to provide temperature data on a predetermined area without any separate device for measuring temperature. For example, in various embodiments, by configuring the virtual thermistor, a separate device and/or element is not needed and temperature of the corresponding area can be predicted on the basis of information provided by the electronic device 101. Accordingly, in various embodiments, it is possible to indirectly predict temperature of an area of which the temperature cannot be directly measured.

The electronic device 101 according to an embodiment of the disclosure may include a plurality of electronic components (for example, the camera module 180, the communication module 210, the speaker 220, and the LDI 230 of FIG. 2) mounted into the electronic device 101, and the processor 120 operatively connected to the electronic components, and the processor 120 may be configured to classify a prediction area according to predetermined characteristics, configure a virtual thermistor corresponding to the prediction area on the basis of the classification characteristic of the prediction area, collect information on at least one prediction area on the basis the virtual thermistor, and manage heating of the electronic device on the basis of the collected information.

According to various embodiments, the processor 120 may be configured to classify an area of the electronic device 101 on the basis of the predetermined characteristics corresponding to the prediction areas, and the predetermined characteristics include characteristics according to whether a heating source is included in the prediction area, whether a current can be measured, and/or collectable data is continuous.

According to various embodiments, the processor 120 may be configured to configure a virtual thermistor corresponding to the corresponding prediction area on the basis of at least one piece of data corresponding to each prediction area.

According to various embodiments, at least one piece of the data may include temperature data, current data, continuous data, and/or discontinuous data related to the electronic components.

According to various embodiments, the processor 120 may be configured to configure the same virtual thermistors for areas in equal classification and different thermistors for areas in different classifications.

According to various embodiments, when the virtual thermistor is configured, the processor 120 may be configured to execute a heating source corresponding to the corresponding prediction area or a neighboring heating source, collect temperature data while the heating source is executed, and collect additional data corresponding to the predetermined characteristic of the corresponding prediction area in addition to the temperature data to configure each virtual thermistor.

According to various embodiments, the processor 120 may be configured to collect temperature data and current data related to the heating source on the basis of characteristics indicating that the heating source is included in the prediction area and the current of the heating source can be measured, and configure the virtual thermistor on the basis of the temperature data and the current data.

According to various embodiments, the processor 120 may be configured to collect temperature data and current data related to the heating source while the heating source is executed, configure saturation temperature related to the prediction area on the basis of the temperature data and the current data, and perform exponential fitting (for example, exponential graph fitting) on the saturation temperature to convert the saturation temperature into virtual temperature aspect data.

According to various embodiments, the processor 120 may be configured to collect temperature data and continuous data related to the heating source on the basis of characteristics indicating that the heating source is included in the prediction area, the current of the heating source cannot be measured, and continuous data related to temperature can be collected, and configure the virtual thermistor on the basis of the temperature data and the continuous data.

According to various embodiments, the processor 120 may be configured to collect temperature data and continuous data related to the heating source while the heating source is executed, configure saturation temperature related to the prediction area on the basis of the temperature data and the continuous data, and perform exponential fitting on the saturation temperature to convert the saturation temperature into virtual temperature aspect data.

According to various embodiments, the processor 120 may be configured to collect temperature data and discontinuous data related to the heating source on the basis of characteristics indicating that the heating source is included in the prediction area, the current of the heating source cannot be measured, and discontinuous data related to temperature can be collected, and configure the virtual thermistor on the basis of the temperature data and the discontinuous data.

According to various embodiments, the processor 120 may be configured to collect temperature data and discontinuous data related to the heating source while the heating source is executed, configure saturation temperature related to the prediction area on the basis of the temperature data and the discontinuous data, and perform exponential fitting on the saturation temperature to convert the saturation temperature into virtual temperature aspect data.

According to various embodiments, when the heating source is not included in the prediction area, the processor 120 may be configured to collect temperature data related to a neighboring heating source and configure the virtual thermistor on the basis of the collected temperature data.

According to various embodiments, the processor 120 may be configured to execute the neighboring heating source around the prediction area, collect temperature data related to temperature generated by the neighboring heating source while the neighboring heating source is executed, configure saturation temperature related to the prediction area on the basis of the temperature data, and perform exponential fitting on the saturation temperature to convert the saturation temperature into virtual temperature aspect data.

According to various embodiments, the processor 120 may be configured to manage local heating and/or overall average heating of the electronic device on the basis of the collected information.

Hereinafter, a method of operating the electronic device 101 according to various embodiments is described. Operations performed in the electronic device 101 described below may be performed by the processor 120 including at least one processing circuit (processing circuitry) of the electronic device 101. According to an embodiment, operations performed in the electronic device 101 may be performed by instructions stored in the memory 130 and causing the processor 120 to operate when executed.

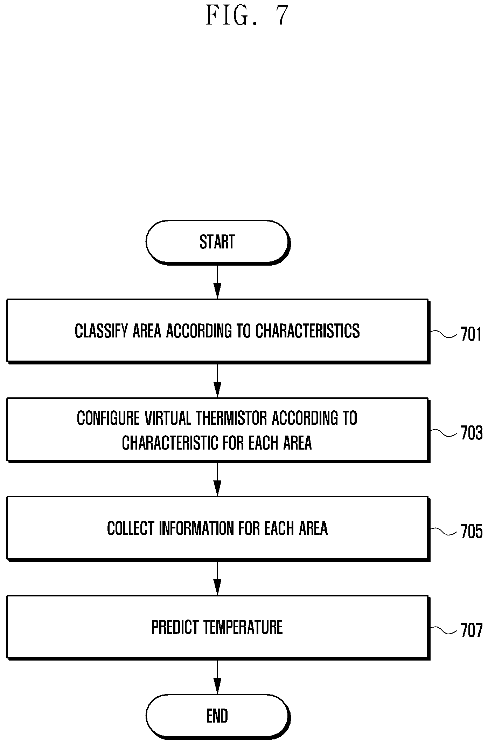

FIG. 7 is a flowchart illustrating a method of operating an electronic device according to an embodiment of the disclosure.

Referring to FIG. 7, in operation 701, the processor 120 of the electronic device 101 may classify an area (for example, a prediction area) associated with prediction of temperature of the electronic device 101 on the basis of a predetermined characteristic. According to an embodiment, the processor 120 may classify the area associated with temperature prediction at least on the basis of whether the corresponding area includes a heating source, whether the current can be measured, and/or data which can be collected is continuous as described with reference to FIGs. 4. 5, and/or 6.

In operation 703, the processor 120 may configure a virtual thermistor on the basis of a characteristic for each of the classified areas. According to an embodiment, the processor 120 may configure a virtual thermistor corresponding to the corresponding area on the basis of at least one piece of data corresponding to each of the classified areas (for example, temperature data, current data, continuous data, and discontinuous data).

According to an embodiment, the processor 120 may configure the same virtual thermistor for areas in the same classification and configure different thermistors for areas in different classifications. According to an embodiment, when configuring the virtual thermistor, the processor 120 may execute the heating source corresponding to the corresponding area or a neighboring heating source, collect temperature data while the heating source is executed, and configure each virtual thermistor on the basis of additional data (for example, current data, continuous data, or discontinuous data) corresponding a predetermined characteristic of the corresponding area in addition to the temperature data.

According to an embodiment, when the area to be predicted includes a heating source and the current of the heating source can be measured, the processor 120 may configure a first virtual thermistor corresponding to the area. According to an embodiment, when the area to be predicted includes the heating source and the current of the heating source can be measured but continuous data related to temperature cannot be collected, the processor 120 may configure a second thermistor in the corresponding area.

According to an embodiment, when the area to be predicted includes the heating source, the current of the heating source cannot be measured, and discontinuous data related to temperature can be collected, the processor 120 may configure a third virtual thermistor in the corresponding area. According to an embodiment, when the area to be predicted does not include the heating source, the processor 120 may configure a fourth virtual thermistor. According to an embodiment, the operation of configuring the virtual thermistors according to characteristics of respective classified areas is described with reference to the drawings below.

In operation 705, the processor 120 may collect information for each area. According to an embodiment, the processor 120 may collect data (for example, temperature data) corresponding to each of at least one prediction area.

In operation 707, the processor 120 may predict temperature. According to an embodiment, the processor 120 may manage heating of the electronic device 101 on the basis of collected data. According to an embodiment, the processor 120 may predict temperature (or heating) for each predetermined area (for example, predict local temperature) on the basis of the collected information or predict overall temperature (or heating) of the electronic device 101 on the basis of the collected information.

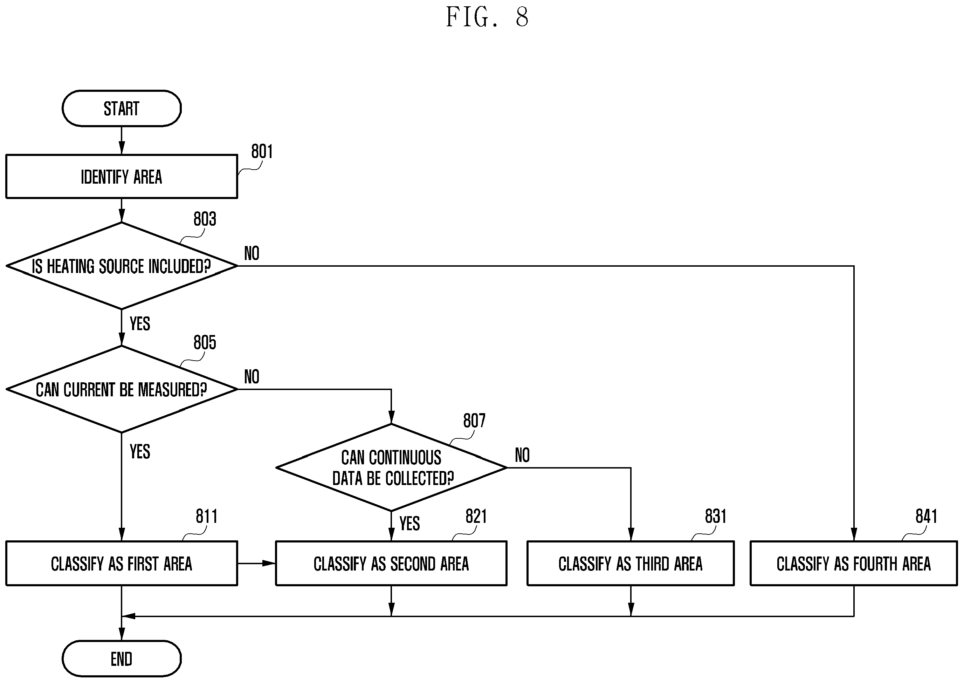

FIG. 8 is a flowchart illustrating a method of operating an electronic device according to an embodiment of the disclosure.

According to an embodiment, FIG. 8 illustrates an example in which the electronic device 101 classifies an area of which temperature is predicted according to a characteristic (for example, whether a heating source is included, the current can be measured, and whether data which can be collected is continuous).

Referring to FIG. 8, in operation 801, the processor 120 of the electronic device 101 may identify a predetermined area. According to an embodiment, the processor 120 may identify a prediction area (for example, an area designated by a user input or an area recognized on the basis of automatic recognition) of which temperature is predicted by the electronic device 101.

In operation 803, the processor 120 may determine whether a heating source is included in the prediction area. According to an embodiment, the processor 120 may determine whether a heating source is included in a location corresponding prediction area on the basis of information (for example, location information and device information) on the heating source for each area preregistered in the memory 130 of the electronic device 101.

When the prediction area includes the heating source (for example, "Yes" of operation 803), for example, the prediction area is an area including a heating source in operation 803, the processor 120 may determine whether the current of the heating source can be measured in operation 805. According to an embodiment, the processor 120 may determine whether the current of the corresponding heating source can be measured on the basis of heating source information.

When the current of the heating source can be measured (for example, "Yes" of operation 805) in operation 805, the processor 120 may classify the prediction area as a first area in operation 811. According to an embodiment, when the prediction area includes the heating source and the current of the heating source can be measured, the processor 120 may classify the prediction area as the first area. According to an embodiment, the processor 120 may configure a first virtual thermistor corresponding to the first area in the prediction area on the basis of classification of the prediction area as the first area.

When the current of the heating source cannot be measured (for example, "No" of operation 805) in operation 805, the processor 120 may determine whether continuous data related to temperature can be collected from the heating source in operation 807.

When continuous data can be collected (for example, "Yes" of operation 807) in operation 807, the processor 120 may classify the prediction area as a second area in operation 821. According to an embodiment, when the heating source is included in the prediction area, the current of the heating source cannot be measured, and continuous data related to temperature can be collected, the processor 120 may classify the prediction area as the second area. According to an embodiment, the processor 120 may configure a second virtual thermistor corresponding to the second area in the prediction area on the basis of classification of the prediction area as the second area.

When continuous data cannot be collected (for example, "No" of operation 807), for example, discontinuous data related to temperature can be collected from the heating source in operation 807, the processor 120 may classify the prediction area as a third area in operation 831. According to an embodiment, when the heating source is included in the prediction area, the current of the heating source cannot be measured, and discontinuous data related to temperature can be collected, the processor 120 may classify the prediction area as the third area. According to an embodiment, the processor 120 may configure a third virtual thermistor corresponding to the third area in the prediction area on the basis of classification of the prediction area as the third area.

When the heating source is not included in the prediction area ("No" of operation 803), for example, the prediction area is an area having no heating area in operation 803, the processor 120 may classify the prediction area as a fourth area in operation 841. According to an embodiment, when the heating source is not included in the prediction area, the processor 120 may classify the prediction area as the fourth area. According to an embodiment, the processor 120 may configure a fourth virtual thermistor corresponding to the fourth area in the prediction area on the basis of classification of the prediction area as the fourth area.

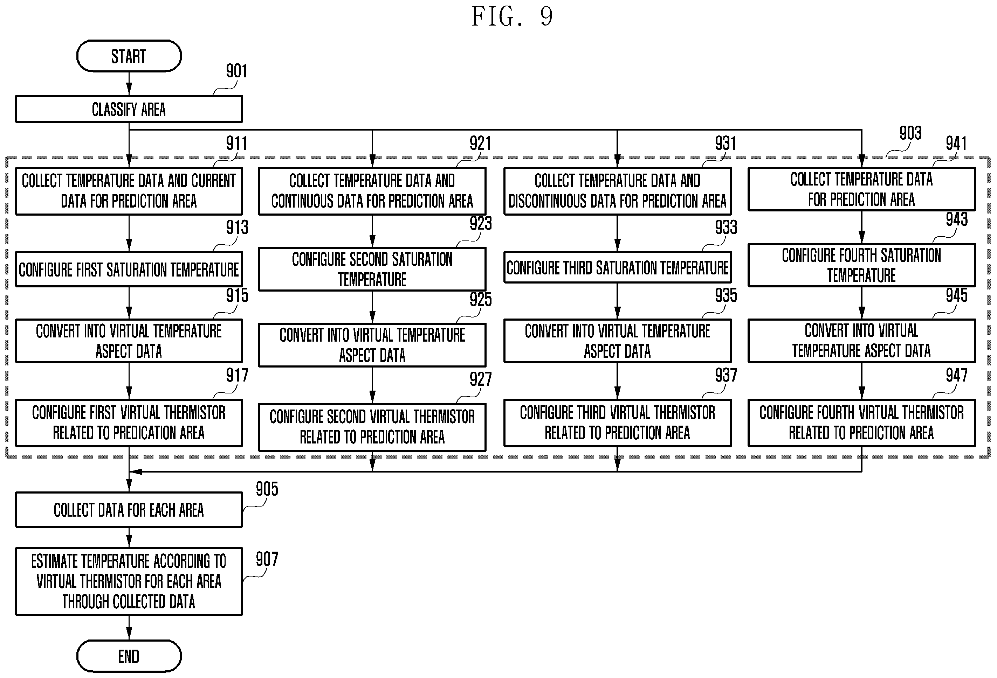

FIG. 9 is a flowchart illustrating a method of operating an electronic device according to an embodiment of the disclosure.

According to an embodiment, FIG. 9 illustrates an example of configuring virtual thermistors corresponding to areas classified according to predetermined characteristics as illustrated in FIG. 8.

Referring to FIG. 9, in operation 901, the processor 120 of the electronic device 101 may classify the area on the basis of a predetermined characteristic of the prediction area. According to an embodiment, the processor 120 may classify the prediction area into a first area, a second area, a third area, and a fourth area according to whether the prediction area includes a heating source, whether the current can be measured, and/or whether collectable data is continuous as described with reference to FIG. 8.

In operation 903, the processor 120 may perform an operation of configuring a virtual thermistor corresponding to the prediction area on the basis of area classification. According to an embodiment, the processor 120 may configure a predetermined virtual thermistor corresponding to classification of the first area, the second area, the third area, or the fourth area for the prediction area.

For example, the processor 120 may configure a first virtual thermistor for the prediction area on the basis of classification of the prediction area as the first area (for example, operation 911 to operation 917).

In another example, the processor 120 may configure a second virtual thermistor for the prediction area on the basis of classification of the prediction area as the second area (for example, operation 921 to operation 927).

In another example, the processor 120 may configure a third virtual thermistor for the prediction area on the basis of classification of the prediction area as the third area (for example, operation 931 to operation 937).

In another example, the processor 120 may configure a fourth virtual thermistor for the prediction area on the basis of classification of the prediction area as the fourth area (for example, operation 941 to operation 947).

According to an embodiment, operation 911 to operation 917 may indicate an example of configuring the virtual thermistor for the prediction area when the heating source is included in the prediction area and the current of the heating source can be measured, for example, when the prediction area is classified as the first area.

In operation 911, the processor 120 may collect temperature data and current data of the prediction area classified as the first area. According to an embodiment, the processor 120 may collect temperature data and current data related to the prediction area by the electronic device 101 itself. For example, the processor 120 may collect temperature data and current data on the basis of a value made by a physical sensor included in the electronic device 101 (for example, a measured temperature value and a measured current value) or a predetermined table of usage temperature and usage current for each electronic component.

According to another embodiment, with respect to measurement of the temperature and the current for the prediction area, the temperature and the current may be simultaneously measured for the prediction area by separate external devices (for example, measurement devices (for example, a heat measurement device (or a thermal imaging camera) and a current measurement device)) outside the electronic device 101, and the processor 120 may acquire (for example, receive) and collect temperature data and current data from the external devices through wired communication or wireless communication.

According to another embodiment, the temperature data and the current data may use a value directly input by the user. According to an embodiment, the processor 120 may collect temperature data and current data related to the measured temperature and current from the external devices while operating the heating source of the prediction area.

In operation 913, the processor 120 may configure first saturation temperature (or critical temperature) related to the prediction area on the basis of the temperature data and the current data. In an embodiment, saturation temperature may indicate reference temperature (for example, temperature at which phase transition occurs) for determining a heating reference of the corresponding area in the electronic device 101. According to an embodiment, the processor 120 may calculate thermal resistance (R) of the prediction area by using the temperature data and the current data. According to an embodiment, the thermal resistance (R) may be obtained as shown in [Equation 1] below.

[156] [Equation 1]

$$R = \frac{T_s - T_i}{Q}$$

In [Equation 1], 'R' denotes thermal resistor, '$T_s$' denotes saturation temperature of a heating source in a prediction area, 'Ti' denotes initial temperature (for example, atmospheric temperature: room temperature) of the heating source, and 'Q' denotes power consumption of the heating source.

According to an embodiment, the processor 120 may configure first saturation temperature according to current consumption of the heating source by using the thermal resistance obtained as in [Equation 1]. According to an embodiment, when the prediction area is an area in which the LDI 230 is disposed and a virtual thermistor is configured in the area in which the LDI 230 is disposed, if it is assumed that temperature of the LDI reaches about 47 degrees while about 900 mA of current consumption of the LDI 230 which is the heating source is maintained for about 30 minutes, the thermal resistance (R) may be '6'. Through [Equation 1], saturation temperature (for example, Tsat = Ts) can be obtained.

In operation 915, the processor 120 may convert the first saturation temperature into virtual temperature aspect data. According to an embodiment, the processor 120 may perform exponential fitting (for example, exponential graph fitting) on the first saturation temperature to finally convert the first saturation temperature into the virtual temperature aspect data (for example, heating source virtual thermistor temperature or predicted temperature). The above description may be defined as shown in [Equation 2] below.

[Equation 2]

$$Tskin\,(t + \Delta t) = Tskin\,(t) + \left(Tsat\,(t + \Delta t) - Tskin\,(t)\right) \times e^{-\frac{\Delta t}{\tau}}$$

In [Equation 2], 'Tskin (t)' denotes temperature of a virtual thermistor of a heating source (for example, predicted

temperature), '∆t' denotes a monitoring time of the virtual thermistor (for example, a monitoring time period designated to the electronic device 101 such as 1 second, 5 seconds, or 10 seconds), and 'Tsat' indicates saturation temperature.

'$e^{-\frac{\Delta t}{\tau}}$, denotes a monitoring time compared to a saturation temperature time, 'e' denotes a change (for example, temperature change modeling), and 'τ' denotes a saturation temperature time constant.

In operation 917, the processor 120 may configure a first virtual thermistor related to the prediction area. According to an embodiment, the processor 120 may configure virtual temperature aspect data as the first virtual thermistor for the prediction area.

According to an embodiment, operation 921 to operation 927 may indicate an example of configuring a second virtual thermistor for the prediction area when the heating source is included in the prediction area, the current of the heating source cannot be measured, and continuous data related to temperature can be collected, for example, when the prediction area is classified as the second area.

In operation 921, the processor 120 may collect temperature data and continuous data for the prediction area classified as the second area. According to an embodiment, the processor 120 may collect temperature data related to the prediction area autonomously by the electronic device 101. For example, the processor 120 may collect temperature data on the basis of a value (for example, a measured temperature value) made by a physical sensor included in the electronic device 101 or a predetermined table for usage temperature for each electronic component. According to another embodiment, with respect to measurement of the temperature of the prediction area, the temperature may be measured for the prediction area by a separate external device (for example, a temperature measurement device or a thermal imaging camera) outside the electronic device 101, and the processor 120 may acquire (for example, receive) and collect temperature data from the external device through wired communication or wireless communication. According to another embodiment, the temperature data may use a value directly input by the user. According to an embodiment, the processor 120 may collect continuous data while collecting temperature data by operating the heating source in the prediction area.

In operation 923, the processor 120 may configure second saturation temperature (or threshold temperature) related to the prediction area on the basis of the temperature data and the continuous data. According to an embodiment, the processor 120 may fit the continuous data to the temperature data of the prediction area on the basis of the assumption that the continuous data of the heating source in the prediction area and the temperature data of the prediction area have a linear relation therebetween.

According to an embodiment, when the prediction area is an area in which the speaker 220 is disposed and a virtual thermistor is configured in the area in which the speaker 220 is disposed, saturation temperature (for example, Tsat = a X Tcoil + b, where a and b are linear function variables and Tcoil is speaker coil saturation temperature) may be configured by linearly fitting continuous data (for example, coil temperature) of the speaker 220 which is the heating source to temperature data of the area in which the speaker 220 is disposed.

In operation 925, the processor 120 may convert the second saturation temperature into virtual temperature aspect data. According to an embodiment, the processor 120 may perform exponential fitting on the second saturation temperature to finally convert the second saturation temperature into virtual temperature aspect data (for example, heating source virtual thermistor temperature or predicted temperature) as shown in [Equation 2].

In operation 927, the processor 120 may configure a second virtual thermistor related to the prediction area. According to an embodiment, the processor 120 may configure virtual temperature aspect data as the second virtual thermistor for the prediction area.

According to an embodiment, operation 931 to operation 937 may indicate an example of configuring a third virtual thermistor for the prediction area when the heating source is included in the prediction area, the current of the heating source cannot be measured, and discontinuous data related to temperature can be collected, for example, when the prediction area is classified as a third area.

In operation 931, the processor 120 may collect temperature data and discontinuous data for the prediction area classified as the third area.

According to an embodiment, the processor 120 may collect temperature data related to the prediction area autonomously by the electronic device 101. For example, the processor 120 may collect temperature data on the basis of a value (for example, a measured temperature value) made by a physical sensor included in the electronic device 101 or a predetermined table for usage temperature for each electronic component.

According to another embodiment, with respect to measurement of the temperature of the prediction area, the temperature may be measured for the prediction area by a separate external device (for example, a temperature measurement device or a thermal imaging camera) outside the electronic device 101, and the processor 120 may acquire (for example, receive) and collect temperature data from the external device through wired communication or wireless communication. According to another embodiment, the temperature data may use a value directly input by the user.

According to an embodiment, the processor 120 may collect discontinuous data while collecting temperature data by operating the heating source in the prediction area.

In operation 933, the processor 120 may configure third saturation temperature (or threshold temperature) related to the prediction area on the basis of the temperature data and the discontinuous data. According to an embodiment, the processor 120 may fit the temperature data of the prediction area to the saturation temperature of the prediction area one-to-one according to the discontinuous data of the heating source in the prediction area. According to an embodiment, when the prediction area is an area in which a front camera is disposed and a virtual thermistor is configured in the area in which the front camera is disposed, the discontinuous data may indicate '1' when the front camera which is the heating source operates, and the discontinuous data may indicate '0' when the front camera does not operate.

According to an embodiment, when the discontinuous data is '1', the processor 120 may configure predetermined temperature (for example, maximum temperature based on heating) reached through the operation of the front camera as saturation temperature. According to an embodiment, when the discontinuous data is '0', the processor 120 may configure temperature that is the most similar to the atmospheric temperature (or room temperature) (for example, about 25 degrees) as saturation temperature.

For example, when it is assumed that temperature of the prediction area is about 42 degrees while the front camera operates, about 42 degrees may be configured as saturation temperature (for example, Tsat = 42). In another example, when the front camera does not operate, temperature (for example, about 25 degrees) of another thermistor (for example, a battery thermistor) similar to the atmospheric temperature may be configured as saturation temperature (for example, Tsat = 25). According to some embodiments, when the number of pieces of discontinuous data is plural and the number of temperatures corresponding thereto is plural, the processor 120 may configure a plurality of saturation temperatures in accordance therewith.

In operation 935, the processor 120 may convert the third saturation temperature into virtual temperature aspect data. According to an embodiment, the processor 120 may perform exponential fitting on the second saturation temperature to finally convert the second saturation temperature into virtual temperature aspect data (for example, heating source virtual thermistor temperature or predicted temperature) as shown in [Equation 2].

In operation 937, the processor 120 may configure a third virtual thermistor related to the prediction area. According to an embodiment, the processor 120 may configure virtual temperature aspect data as the third virtual thermistor for the prediction area.

According to an embodiment, operation 941 to operation 947 may indicate an example of configuring a fourth virtual thermistor for the prediction area when the heating source is included in the prediction area, for example, when the prediction area is classified as a fourth area.

In operation 941, the processor 120 may collect temperature data for the prediction area classified as the fourth area.

According to an embodiment, the processor 120 may collect temperature data related to the prediction area autonomously by the electronic device 101. For example, the processor 120 may collect temperature data on the basis of a value (for example, a measured temperature value) made by a physical sensor included in the electronic device 101 or a predetermined table for usage temperature for each electronic component.

According to another embodiment, with respect to measurement of the temperature of the prediction area, the temperature may be measured for the prediction area by a separate external device (for example, a temperature measurement device or a thermal imaging camera) outside the electronic device 101, and the processor 120 may acquire (for example, receive) and collect temperature data from the external device through wired communication or wireless communication.

According to another embodiment, the temperature data may use a value directly input by the user. According to an embodiment, when the prediction area is an area including no heating source, the processor 120 may operate another heating source around the prediction area and collect temperature data related to temperature generated by the neighboring heating source.

In operation 943, the processor 120 may configure fourth saturation temperature (or threshold temperature) related to the prediction area on the basis of temperature data. According to an embodiment, the processor 120 may configure the collected temperature data as the fourth saturation temperature. According to some embodiments, the processor 120 may operate a heating source (for example, an application) executed frequently by the user and collect saturation temperature of the prediction area.

In operation 945, the processor 120 may convert the fourth saturation temperature into virtual temperature aspect data. According to an embodiment, the processor 120 may perform exponential fitting on the second saturation temperature to finally convert the second saturation temperature into virtual temperature aspect data (for example, heating source virtual thermistor temperature or predicted temperature) as shown in [Equation 2].

In operation 947, the processor 120 may configure a fourth virtual thermistor related to the prediction area. According to an embodiment, the processor 120 may configure virtual temperature aspect data as the fourth virtual thermistor for the prediction area.

According to an embodiment, although not illustrated in FIG. 9, the processor 120 may configure a virtual thermistor for overall average temperature in the electronic device 101. According to an embodiment, the processor 120 may measure overall average temperature on the basis of the average of temperature data collected for respective prediction areas in operation 903 and configure the overall average temperature as all virtual thermistors. According to some embodiments, in the example of operation 941 to operation 947, the processor 120 may execute the corresponding heating source on the basis of a heating scenario frequency used by the user, collect and average saturation temperature according to thereto, estimate overall average temperature, and configure the overall average temperature as all virtual thermistors.

In operation 905, the processor 120 may collect data for each area. According to an embodiment, the processor 120 may collect data (for example, temperature data) for each prediction area performed in operation 903.

In operation 907, the processor 120 may estimate temperature according to the virtual thermistor for each prediction area by using the collected data.

According to various embodiments, for an area of the electronic device 101 in which a physical thermistor cannot be mounted (or an area of which temperature cannot be predicted), it is possible to locally collect and predict (or estimate) temperature of the corresponding area through a configuration of a virtual thermistor. Accordingly, in various embodiments, it is possible to provide an index for determining real-time temperature distribution to the electronic device 101 and monitor an overall temperature state of the electronic device 101 in real time. For example, surface heating of the electronic device 101 can be predicted through the configuration of the virtual thermistor and, as a result, overall heating of the electronic device 101 can be effectively managed.

A method of operations performed by the electronic device 101 according to an embodiment of the disclosure may include an operation of classifying a prediction area on the basis of predetermined characteristics, an operation of configuring a virtual thermistor corresponding to the prediction area on the basis of the classification characteristic of the prediction area, an operation of collecting information on at least one prediction area on the basis of the virtual thermistor, and an operation of managing heating of the electronic device 101 on the basis of the collected information.

According to various embodiments, the operation of classifying may include an operation of classifying the area of the electronic device 101 according to predetermined characteristics corresponding to the prediction area, and the predetermined characteristics may include characteristics according to whether a heating source is included in the prediction area, whether a current can be measured, and/or collectable data is continuous.

According to various embodiments, the operation of configuring the virtual thermistor may include an operation of configuring a virtual thermistor corresponding to the corresponding prediction area on the basis of at least one piece of data corresponding to each prediction area, and at least one piece of the data may include temperature data, current data, continuous data, and/or discontinuous data related to the electronic components.

According to various embodiments, when the virtual thermistor is configured, the operation of configuring the virtual thermistor may include an operation of execute a heating source corresponding to the corresponding prediction area or a neighboring heating source, an operation of collecting collect temperature data while the heating source is executed, and an operation of collecting additional data corresponding to the predetermined characteristic of the corresponding prediction area in addition to the temperature data to configure each virtual thermistor.

According to various embodiments, the operation of collecting the additional data may include an operation of collecting temperature data and current data related to the heating source on the basis of characteristics indicating that the heating source is included in the prediction area and the current of the heating source can be measured, an operation of collecting temperature data and continuous data related to the heating source on the basis of characteristics indicating that the heating source is included in the prediction area, the current of the heating source cannot be measured, and continuous data related to temperature can be collected, an operation of collecting temperature data and discontinuous data related to the heating source on the basis of characteristics indicating that the heating source is included in the prediction area, the current of the heating source cannot be measured, and discontinuous data related to temperature can be collected, and an operation of collecting temperature data related to a neighboring heating source when the heating source is not included in the prediction area.

## Claims

1. An electronic device (101) comprising:

   a plurality of electronic components (410, 420) mounted into the electronic device (101);
   a processor (120) operatively connected to the electronic components (410, 420); and
   a memory (130) storing instructions that, when executed by the processor (120), cause the electronic device (101) to:

   classify a plurality of areas of the electronic device (101) into a plurality of prediction areas (430, 530), wherein the plurality of prediction areas (430, 530) is classified based on predetermined characteristics of whether an area of the electronic device (101) includes an electronic component (410, 420) and whether a current of the electronic component (410, 420) is measured;

configure a virtual thermistor corresponding to each of the plurality of prediction areas (430, 530), based on the classification of the plurality of prediction areas (430, 530), wherein the virtual thermistor is configured as a virtualized sensor for predicting temperature;

collect information on each of the plurality of prediction areas (430, 530), based on the virtual thermistor; and manage temperature for each of the plurality of prediction areas (430, 530), based on the collected information.

2. The electronic device (101) of claim 1, wherein the instructions, when executed by the processor, cause the electronic device to configure a virtual thermistor corresponding to the corresponding prediction area, based on at least one piece of data corresponding to each of the plurality of prediction areas;

the at least one piece of the data comprises temperature data, current data, or data related to the electronic components.

3. The electronic device (101) of claim 1, wherein the instructions, when executed by the processor, cause the electronic device to:

configure identical virtual thermistors for prediction areas in equal classification; and
configure different virtual thermistors for prediction areas in different classifications.

4. The electronic device (101) of claim 3, wherein the instructions, when executed by the processor, cause the electronic device to, when the virtual thermistor is configured:

execute an electronic component that generate heat in the prediction area;
collect temperature data corresponding to the prediction area while the electronic component is executed;
collect additional data corresponding to the predetermined characteristic of the prediction area; and
configure each virtual thermistor based on the temperature data and the additional data.

5. The electronic device (101) of claim 4, wherein the instructions, when executed by the processor, cause the electronic device to:

collect temperature data and current data related to the electronic component, based on characteristics indicating that the electronic component is included in the prediction area and the current of the electronic component can be measured; and
configure the virtual thermistor, based on the temperature data and the current data.

6. The electronic device (101) of claim 5, wherein the instructions, when executed by the processor, cause the electronic device to:

collect temperature data and current data related to the electronic component while the electronic component is executed;
calculate a saturation temperature related to the prediction area, based on the temperature data and the current data; and
perform exponential fitting on the saturation temperature to convert the saturation temperature into virtual temperature aspect data, wherein the virtual temperature aspect data is predicted temperature for the prediction area.

7. The electronic device (101) of claim 4, wherein the instructions, when executed by the processor, cause the electronic device to:

collect temperature data and data related to temperature can be collected from the electronic component, based on characteristics indicating that the electronic component is included in the prediction area and the current of the electronic component cannot be measured; and
configure the virtual thermistor, based on the temperature data and the data related to temperature.

8. The electronic device (101) of claim 7, wherein the instructions, when executed by the processor, cause the electronic device to:

collect temperature data and data related to the temperature can be collected from electronic component while the electronic component is executed;

calculate a saturation temperature related to the prediction area, based on the temperature data and the data related to temperature; and

perform exponential fitting on the saturation temperature to convert the saturation temperature into virtual temperature aspect data, wherein the virtual temperature aspect data is predicted temperature for the prediction area.

9. The electronic device (101) of claim 4, wherein the instructions, when executed by the processor, cause the electronic device to:

collect temperature data related to a neighboring electronic component when the electronic component is not included in the prediction area; and

configure the virtual thermistor, based on the collected temperature data.

10. The electronic device (101) of claim 9, wherein the instructions, when executed by the processor, cause the electronic device to:

execute the neighboring electronic component around the prediction area;

collect temperature data related to temperature generated by the neighboring electronic component while the neighboring electronic component is executed;

calculate a saturation temperature related to the prediction area, based on the temperature data; and

perform exponential fitting on the saturation temperature to convert the saturation temperature into virtual temperature aspect data, wherein the virtual temperature aspect data is predicted temperature for the prediction area.

11. The electronic device (101) of claim 1, wherein the instructions, when executed by the processor, cause the electronic device to manage local heating or overall average heating of the electronic device, based on the collected information.

12. A method of operating an electronic device (101), the method comprising:

classifying a plurality of areas of the electronic device into a plurality of prediction areas, wherein the plurality of prediction areas is classified based on predetermined characteristics of whether an area of the electronic device includes an electronic component and whether a current of the electronic component is measured;

configuring a virtual thermistor corresponding to each of the plurality of prediction areas, based on the classification of the plurality of prediction areas, wherein the virtual thermistor is configured as a virtualized sensor for predicting temperature;

collecting information on each of the plurality of prediction areas, based on the virtual thermistor; and

managing temperature for each of the plurality of prediction areas, based on the collected information.

13. The method of claim 12, wherein the configuring of the virtual thermistor comprises:

configuring the virtual thermistor corresponding to the corresponding prediction area, based on at least one piece of data corresponding to each of the plurality of prediction areas; and

the at least one piece of the data comprises temperature data, current data, or data related to electronic components.

14. The method of claim 12, wherein the configuring of the virtual thermistor comprises:

configuring identical virtual thermistors for prediction areas in equal classification; and

configuring different virtual thermistors for prediction areas in different classifications.

15. The method of claim 12, wherein the configuring of the virtual thermistor comprises:

executing an electronic component a that generate heat in the prediction area;

collecting temperature data corresponding to the prediction area while the electronic component is executed;

collecting additional data corresponding to the predetermined characteristic of the prediction area; and configuring each virtual thermistor based on the temperature data and the additional data.

**Patentansprüche**

1. Elektronische Vorrichtung (101), umfassend:

   eine Vielzahl von elektronischen Komponenten (410, 420), die in der elektronischen Vorrichtung (101) montiert sind;
   einen Prozessor (120), der mit den elektronischen Komponenten (410, 420) wirkverbunden ist; und
   einen Speicher (130), auf dem Anweisungen gespeichert sind, die bei Ausführung durch den Prozessor (120) die elektronische Vorrichtung (101) zu Folgendem veranlassen:

   Klassifizieren einer Vielzahl von Bereichen der elektronischen Vorrichtung (101) in eine Vielzahl von Vorhersagebereichen (430, 530), wobei die Vielzahl von Vorhersagebereichen (430, 530) auf Grundlage vorbestimmter Eigenschaften klassifiziert wird, ob ein Bereich der elektronischen Vorrichtung (101) eine elektronische Komponente (410, 420) beinhaltet und ob ein Strom der elektronischen Komponente (410, 420) gemessen wird;
   Konfigurieren eines virtuellen Thermistors, der jedem aus der Vielzahl von Vorhersagebereichen (430, 530) entspricht, auf Grundlage der Klassifizierung der Vielzahl von Vorhersagebereichen (430, 530), wobei der virtuelle Thermistor als ein virtualisierter Sensor zum Vorhersagen der Temperatur konfiguriert ist;
   Sammeln von Informationen über jeden aus der Vielzahl von Vorhersagebereichen (430, 530) auf Grundlage des virtuellen Thermistors; und
   Verwalten der Temperatur für jeden aus der Vielzahl von Vorhersagebereichen (430, 530) auf Grundlage der gesammelten Informationen.

2. Elektronische Vorrichtung (101) nach Anspruch 1, wobei die Anweisungen bei Ausführung durch den Prozessor die elektronische Vorrichtung dazu veranlassen, einen virtuellen Thermistor entsprechend dem entsprechenden Vorhersagebereich auf Grundlage von mindestens einem Datenelement entsprechend jedem der Vielzahl von Vorhersagebereichen zu konfigurieren;
   wobei das mindestens eine Datenelement Temperaturdaten, aktuelle Daten oder Daten in Bezug auf die elektronischen Komponenten umfasst.

3. Elektronische Vorrichtung (101) nach Anspruch 1, wobei die Anweisungen bei Ausführung durch den Prozessor die elektronische Vorrichtung zu Folgendem veranlassen:

   Konfigurieren identischer virtueller Thermistoren für Vorhersagebereiche in gleicher Klassifizierung; und
   Konfigurieren verschiedener virtueller Thermistoren für Vorhersagebereiche in verschiedenen Klassifizierungen.

4. Elektronische Vorrichtung (101) nach Anspruch 3, wobei die Anweisungen bei Ausführung durch den Prozessor die elektronische Vorrichtung zu Folgendem veranlassen, wenn der virtuelle Thermistor konfiguriert ist:

   Ausführen einer elektronischen Komponente, die Wärme in dem Vorhersagebereich erzeugt;
   Sammeln von Temperaturdaten, die dem Vorhersagebereich entsprechen, während die elektronische Komponente ausgeführt wird;
   Sammeln von zusätzlichen Daten, die der vorbestimmten Eigenschaft des Vorhersagebereichs entsprechen; und
   Konfigurieren jedes virtuellen Thermistors auf Grundlage der Temperaturdaten und der zusätzlichen Daten.

5. Elektronische Vorrichtung (101) nach Anspruch 4, wobei die Anweisungen bei Ausführung durch den Prozessor die elektronische Vorrichtung zu Folgendem veranlassen:

   Sammeln von Temperaturdaten und aktuellen Daten in Bezug auf die elektronische Komponente auf Grundlage von Eigenschaften, die angeben, dass die elektronische Komponente in dem Vorhersagebereich beinhaltet ist und der Strom der elektronischen Komponente gemessen werden kann; und
   Konfigurieren des virtuellen Thermistors auf Grundlage der Temperaturdaten und der aktuellen Daten.

6. Elektronische Vorrichtung (101) nach Anspruch 5, wobei die Anweisungen bei Ausführung durch den Prozessor die elektronische Vorrichtung zu Folgendem veranlassen:

   Sammeln von Temperaturdaten und aktuellen Daten in Bezug auf die elektronische Komponente, während die elektronische Komponente ausgeführt wird;
   Berechnen einer Sättigungstemperatur in Bezug auf den Vorhersagebereich auf Grundlage der Temperaturdaten und der aktuellen Daten; und
   Durchführen einer exponentiellen Anpassung an die Sättigungstemperatur, um die Sättigungstemperatur in virtuelle Temperaturaspektdaten umzuwandeln, wobei die virtuellen Temperaturaspektdaten die vorhergesagte Temperatur für den Vorhersagebereich sind.

7. Elektronische Vorrichtung (101) nach Anspruch 4, wobei die Anweisungen bei Ausführung durch den Prozessor die elektronische Vorrichtung zu Folgendem veranlassen:

   Sammeln von Temperaturdaten und von Daten in Bezug auf die Temperatur können von der elektronischen Komponente auf Grundlage von Eigenschaften gesammelt werden, die angeben, dass die elektronische Komponente in dem Vorhersagebereich beinhaltet ist und der Strom der elektronischen Komponente nicht gemessen werden kann; und
   Konfigurieren des virtuellen Thermistors auf Grundlage der Temperaturdaten und der Daten in Bezug auf die Temperatur.

8. Elektronische Vorrichtung (101) nach Anspruch 7, wobei die Anweisungen bei Ausführung durch den Prozessor die elektronische Vorrichtung zu Folgendem veranlassen:

   Sammeln von Temperaturdaten und Daten in Bezug auf die Temperatur können von der elektronischen Komponente gesammelt werden, während die elektronische Komponente ausgeführt wird;
   Berechnen einer Sättigungstemperatur in Bezug auf den Vorhersagebereich auf Grundlage der Temperaturdaten und der Daten in Bezug auf die Temperatur; und
   Durchführen einer exponentiellen Anpassung an die Sättigungstemperatur, um die Sättigungstemperatur in virtuelle Temperaturaspektdaten umzuwandeln, wobei die virtuellen Temperaturaspektdaten die vorhergesagte Temperatur für den Vorhersagebereich sind.

9. Elektronische Vorrichtung (101) nach Anspruch 4, wobei die Anweisungen bei Ausführung durch den Prozessor die elektronische Vorrichtung zu Folgendem veranlassen:

   Sammeln von Temperaturdaten in Bezug auf eine benachbarte elektronische Komponente, wenn die elektronische Komponente nicht in dem Vorhersagebereich beinhaltet ist; und
   Konfigurieren des virtuellen Thermistors auf Grundlage der gesammelten Temperaturdaten.

10. Elektronische Vorrichtung (101) nach Anspruch 9, wobei die Anweisungen bei Ausführung durch den Prozessor die elektronische Vorrichtung zu Folgendem veranlassen:

    Ausführen der benachbarten elektronischen Komponente um den Vorhersagebereich;
    Sammeln von Temperaturdaten in Bezug auf die Temperatur, die durch die benachbarte elektronische Komponente erzeugt werden, während die benachbarte elektronische Komponente ausgeführt wird;
    Berechnen einer Sättigungstemperatur in Bezug auf den Vorhersagebereich auf Grundlage der Temperaturdaten; und
    Durchführen einer exponentiellen Anpassung an die Sättigungstemperatur, um die Sättigungstemperatur in virtuelle Temperaturaspektdaten umzuwandeln, wobei die virtuellen Temperaturaspektdaten die vorhergesagte Temperatur für den Vorhersagebereich sind.

11. Elektronische Vorrichtung (101) nach Anspruch 1, wobei die Anweisungen bei Ausführung durch den Prozessor die elektronische Vorrichtung dazu veranlassen, eine lokale Erwärmung oder eine durchschnittliche Gesamterwärmung der elektronischen Vorrichtung auf Grundlage der gesammelten Informationen zu verwalten.

12. Verfahren zum Betreiben einer elektronischen Vorrichtung (101), wobei das Verfahren Folgendes umfasst:

    Klassifizieren einer Vielzahl von Bereichen der elektronischen Vorrichtung in eine Vielzahl von Vorhersagebereichen, wobei die Vielzahl von Vorhersagebereichen auf Grundlage vorbestimmter Eigenschaften klassifiziert wird, ob ein Bereich der elektronischen Vorrichtung eine elektronische Komponente beinhaltet und ob ein Strom der elektronischen Komponente gemessen wird;

Konfigurieren eines virtuellen Thermistors, der jedem aus der Vielzahl von Vorhersagebereichen entspricht, auf Grundlage der Klassifizierung der Vielzahl von Vorhersagebereichen, wobei der virtuelle Thermistor als ein virtualisierter Sensor zum Vorhersagen der Temperatur konfiguriert ist;

Sammeln von Informationen über jeden aus der Vielzahl von Vorhersagebereichen auf Grundlage des virtuellen Thermistors; und

Verwalten der Temperatur für jeden aus der Vielzahl von Vorhersagebereichen auf Grundlage der gesammelten Informationen.

13. Verfahren nach Anspruch 12, wobei das Konfigurieren des virtuellen Thermistors Folgendes umfasst:

Konfigurieren des virtuellen Thermistors, der dem entsprechenden Vorhersagebereich entspricht, auf Grundlage von mindestens einem Datenelement, das jedem der Vielzahl von Vorhersagebereichen entspricht; und wobei das mindestens eine Datenelement Temperaturdaten, aktuelle Daten oder Daten in Bezug auf elektronische Komponenten umfasst.

14. Verfahren nach Anspruch 12, wobei das Konfigurieren des virtuellen Thermistors Folgendes umfasst:

Konfigurieren identischer virtueller Thermistoren für Vorhersagebereiche in gleicher Klassifizierung; und Konfigurieren verschiedener virtueller Thermistoren für Vorhersagebereiche in verschiedenen Klassifizierungen.

15. Verfahren nach Anspruch 12, wobei das Konfigurieren des virtuellen Thermistors Folgendes umfasst:

Ausführen einer elektronischen Komponente a, die Wärme in dem Vorhersagebereich erzeugt;
Sammeln von Temperaturdaten, die dem Vorhersagebereich entsprechen, während die elektronische Komponente ausgeführt wird;
Sammeln von zusätzlichen Daten, die der vorbestimmten Eigenschaft des Vorhersagebereichs entsprechen; und
Konfigurieren jedes virtuellen Thermistors auf Grundlage der Temperaturdaten und der zusätzlichen Daten.

**Revendications**

1. Dispositif électronique (101) comprenant :

une pluralité de composants électroniques (410, 420) montés dans le dispositif électronique (101) ;
un processeur (120) connecté fonctionnellement aux composants électroniques (410, 420) ; et
une mémoire (130) stockant des instructions qui, lorsqu'elles sont exécutées par le processeur (120), amènent le dispositif électronique (101) à :

classifier une pluralité de zones du dispositif électronique (101) en une pluralité de zones de prédiction (430, 530), dans lequel la pluralité de zones de prédiction (430, 530) sont classifiées sur la base de caractéristiques prédéterminées indiquant si une zone du dispositif électronique (101) comprend un composant électronique (410, 420) et si un courant du composant électronique (410, 420) est mesuré ;
configurer une thermistance virtuelle correspondant à chacune de la pluralité de zones de prédiction (430, 530), sur la base de la classification de la pluralité de zones de prédiction (430, 530), dans lequel la thermistance virtuelle est configurée comme un capteur virtualisé pour prédire la température ;
collecter des informations sur chacune de la pluralité de zones de prédiction (430, 530), sur la base de la thermistance virtuelle ; et
gérer la température pour chacune de la pluralité de zones de prédiction (430, 530), sur la base des informations collectées.

2. Dispositif électronique (101) selon la revendication 1, dans lequel les instructions, lorsqu'elles sont exécutées par le processeur, amènent le dispositif électronique à configurer une thermistance virtuelle correspondant à la zone de prédiction correspondante, sur la base d'au moins un élément de donnée correspondant à chacune de la pluralité de zones de prédiction ;
l'au moins un élément de donnée comprend des données de température, des données de courant ou des données liées aux composants électroniques.

3. Dispositif électronique (101) selon la revendication 1, dans lequel les instructions, lorsqu'elles sont exécutées par le processeur, amènent le dispositif électronique à :

configurer des thermistances virtuelles identiques pour des zones de prédiction dans une classification égale ; et configurer des thermistances virtuelles différentes pour des zones de prédiction dans des classifications différentes.

4. Dispositif électronique (101) selon la revendication 3, dans lequel les instructions, lorsqu'elles sont exécutées par le processeur, amènent le dispositif électronique à, lorsque la thermistance virtuelle est configurée :

exécuter un composant électronique qui génère de la chaleur dans la zone de prédiction ;
collecter des données de température correspondant à la zone de prédiction pendant que le composant électronique est exécuté ;
collecter des données supplémentaires correspondant à la caractéristique prédéterminée de la zone de prédiction ; et
configurer chaque thermistance virtuelle sur la base des données de température et des données supplémentaires.

5. Dispositif électronique (101) selon la revendication 4, dans lequel les instructions, lorsqu'elles sont exécutées par le processeur, amènent le dispositif électronique à :

collecter des données de température et des données de courant liées au composant électronique, sur la base de caractéristiques indiquant que le composant électronique est inclus dans la zone de prédiction et que le courant du composant électronique peut être mesuré ; et
configurer la thermistance virtuelle, sur la base des données de température et des données de courant.

6. Dispositif électronique (101) selon la revendication 5, dans lequel les instructions, lorsqu'elles sont exécutées par le processeur, amènent le dispositif électronique à :

collecter des données de température et des données de courant liées au composant électronique pendant que le composant électronique est exécuté ;
calculer une température de saturation liée à la zone de prédiction, sur la base des données de température et des données de courant ; et
effectuer un ajustement exponentiel sur la température de saturation pour convertir la température de saturation en données d'aspect de température virtuelle, dans lequel les données d'aspect de température virtuelle sont une température prédite pour la zone de prédiction.

7. Dispositif électronique (101) selon la revendication 4, dans lequel les instructions, lorsqu'elles sont exécutées par le processeur, amènent le dispositif électronique à :

collecter des données de température et des données liées à la température peuvent être collectées à partir du composant électronique, sur la base de caractéristiques indiquant que le composant électronique est inclus dans la zone de prédiction et que le courant du composant électronique ne peut pas être mesuré ; et
configurer la thermistance virtuelle, sur la base des données de température et des données liées à la température.

8. Dispositif électronique (101) selon la revendication 7, dans lequel les instructions, lorsqu'elles sont exécutées par le processeur, amènent le dispositif électronique à :

collecter des données de température et des données liées à la température peuvent être collectées à partir du composant électronique pendant que le composant électronique est exécuté ;
calculer une température de saturation liée à la zone de prédiction, sur la base des données de température et des données liées à la température ; et
effectuer un ajustement exponentiel sur la température de saturation pour convertir la température de saturation en données d'aspect de température virtuelle, dans lequel les données d'aspect de température virtuelle sont une température prédite pour la zone de prédiction.

9. Dispositif électronique (101) selon la revendication 4, dans lequel les instructions, lorsqu'elles sont exécutées par le processeur, amènent le dispositif électronique à :

collecter des données de température liées à un composant électronique voisin lorsque le composant électronique n'est pas inclus dans la zone de prédiction ; et
configurer la thermistance virtuelle, sur la base des données de température collectées.

10. Dispositif électronique (101) selon la revendication 9, dans lequel les instructions, lorsqu'elles sont exécutées par le processeur, amènent le dispositif électronique à :

exécuter le composant électronique voisin autour de la zone de prédiction ;
collecter des données de température liées à la température générée par le composant électronique voisin pendant que le composant électronique voisin est exécuté ;
calculer une température de saturation liée à la zone de prédiction, sur la base des données de température ; et
effectuer un ajustement exponentiel sur la température de saturation pour convertir la température de saturation en données d'aspect de température virtuelle, dans lequel les données d'aspect de température virtuelle sont une température prédite pour la zone de prédiction.

11. Dispositif électronique (101) selon la revendication 1, dans lequel les instructions, lorsqu'elles sont exécutées par le processeur, amènent le dispositif électronique à gérer la chauffe locale ou la chauffe moyenne globale du dispositif électronique, sur la base des informations collectées.

12. Procédé de fonctionnement d'un dispositif électronique (101), le procédé comprenant :

la classification d'une pluralité de zones du dispositif électronique en une pluralité de zones de prédiction, dans lequel la pluralité de zones de prédiction sont classifiées sur la base de caractéristiques prédéterminées indiquant si une zone du dispositif électronique comprend un composant électronique et si un courant du composant électronique est mesuré ;
la configuration d'une thermistance virtuelle correspondant à chacune de la pluralité de zones de prédiction, sur la base de la classification de la pluralité de zones de prédiction, dans lequel la thermistance virtuelle est configurée comme un capteur virtualisé pour prédire la température ;
la collecte d'informations sur chacune de la pluralité de zones de prédiction, sur la base de la thermistance virtuelle ; et
la gestion de la température pour chacune de la pluralité de zones de prédiction, sur la base des informations collectées.

13. Procédé selon la revendication 12, dans lequel la configuration de la thermistance virtuelle comprend :

la configuration de la thermistance virtuelle correspondant à la zone de prédiction correspondante, sur la base d'au moins un élément de donnée correspondant à chacune de la pluralité de zones de prédiction ; et
l'au moins un élément de donnée comprend des données de température, des données de courant ou des données liées aux composants électroniques.

14. Procédé selon la revendication 12, dans lequel la configuration de la thermistance virtuelle comprend :

la configuration de thermistances virtuelles identiques pour des zones de prédiction dans une classification égale ; et
la configuration de thermistances virtuelles différentes pour des zones de prédiction dans des classifications différentes.

15. Procédé selon la revendication 12, dans lequel la configuration de la thermistance virtuelle comprend :

l'exécution d'un composant électronique qui génère de la chaleur dans la zone de prédiction ;
la collecte de données de température correspondant à la zone de prédiction pendant que le composant électronique est exécuté ;

EP 4 280 066 B1

la collecte de données supplémentaires correspondant à la caractéristique prédéterminée de la zone de prédiction ; et
la configuration de chaque thermistance virtuelle sur la base des données de température et des données supplémentaires.

FIG. 1

# FIG. 2

101

| 120 | 130 |
| PROCESSOR | MEMORY |

176 SENSOR MODULE

180 CAMERA MODULE

STATE INFORMATION ~241

VIRTUAL THERMISTOR INFORMATION ~242

210 COMMUNICATION MODULE

251 AREA CLASSIFICATION MODULE

211 FIRST COMMUNICATION MODULE

253 TEMPERATURE CALCULATION MODULE

LDI ~230

212 SECOND COMMUNICATION MODULE

255 MANAGEMENT MODULE

SPEAKER ~220

DISPLAY MODULE ~160

FIG. 3A

FIG. 3B

FIG. 4A

FIG. 4B

FIG. 5

FIG. 6A

FIG. 6B

# FIG. 7

START

CLASSIFY AREA ACCORDING TO CHARACTERISTICS ⌇701

CONFIGURE VIRTUAL THERMISTOR ACCORDING TO CHARACTERISTIC FOR EACH AREA ⌇703

COLLECT INFORMATION FOR EACH AREA ⌇705

PREDICT TEMPERATURE ⌇707

END

# FIG. 8

START

801 IDENTIFY AREA

803 IS HEATING SOURCE INCLUDED? — NO

YES

805 CAN CURRENT BE MEASURED? — NO

YES

807 CAN CONTINUOUS DATA BE COLLECTED? — NO

YES

811 CLASSIFY AS FIRST AREA

821 CLASSIFY AS SECOND AREA

831 CLASSIFY AS THIRD AREA

841 CLASSIFY AS FOURTH AREA

END

FIG. 9

START

CLASSIFY AREA — 901

COLLECT TEMPERATURE DATA AND CURRENT DATA FOR PREDICTION AREA — 911

COLLECT TEMPERATURE DATA AND CONTINUOUS DATA FOR PREDICTION AREA — 921

COLLECT TEMPERATURE DATA AND DISCONTINUOUS DATA FOR PREDICTION AREA — 931

COLLECT TEMPERATURE DATA FOR PREDICTION AREA — 941

CONFIGURE FIRST SATURATION TEMPERATURE — 913

CONFIGURE SECOND SATURATION TEMPERATURE — 923

CONFIGURE THIRD SATURATION TEMPERATURE — 933

CONFIGURE FOURTH SATURATION TEMPERATURE — 943

CONVERT INTO VIRTUAL TEMPERATURE ASPECT DATA — 915

CONVERT INTO VIRTUAL TEMPERATURE ASPECT DATA — 925

CONVERT INTO VIRTUAL TEMPERATURE ASPECT DATA — 935

CONVERT INTO VIRTUAL TEMPERATURE ASPECT DATA — 945

CONFIGURE FIRST VIRTUAL THERMISTOR RELATED TO PREDICATION AREA — 917

CONFIGURE SECOND VIRTUAL THERMISTOR RELATED TO PREDICTION AREA — 927

CONFIGURE THIRD VIRTUAL THERMISTOR RELATED TO PREDICTION AREA — 937

CONFIGURE FOURTH VIRTUAL THERMISTOR RELATED TO PREDICTION AREA — 947

903

COLLECT DATA FOR EACH AREA — 905

ESTIMATE TEMPERATURE ACCORDING TO VIRTUAL THERMISTOR FOR EACH AREA THROUGH COLLECTED DATA — 907

END

EP 4 280 066 B1

**EP 4 280 066 B1**

**REFERENCES CITED IN THE DESCRIPTION**

**Patent documents cited in the description**

- US 2008028778 A1
- US 2008043807 A1
- US 2018181171 A1
- US 8768530 B2